(19) Europäisches Patentamt
European Patent Office
Office européen des brevets

(11) Veröffentlichungsnummer: **0 173 212 B1**

(12) **EUROPÄISCHE PATENTSCHRIFT**

(45) Veröffentlichungstag der Patentschrift: **18.03.92**

(51) Int. Cl.5: **C08G 73/14**, C08L 77/00

(21) Anmeldenummer: **85110364.8**

(22) Anmeldetag: **19.08.85**

Die Akte enthält technische Angaben, die nach dem Eingang der Anmeldung eingereicht wurden und die nicht in dieser Patentschrift enthalten sind.

# (54) Aliphatisch-aromatische Polyamidimide, enthaltend Polyamide.

(30) Priorität: **30.08.84 DE 3431859**

(43) Veröffentlichungstag der Anmeldung:
**05.03.86 Patentblatt 86/10**

(45) Bekanntmachung des Hinweises auf die Patenterteilung:
**18.03.92 Patentblatt 92/12**

(84) Benannte Vertragsstaaten:
**DE FR GB IT NL**

(56) Entgegenhaltungen:
**EP-A- 0 097 434**
**EP-A- 0 136 526**
**EP-A- 0 136 527**
**EP-A- 0 136 528**
**EP-A- 0 136 529**
**DE-A- 1 795 752**
**DE-A- 1 956 512**
**GB-A- 2 039 931**

(73) Patentinhaber: **BAYER AG**
**W-5090 Leverkusen 1 Bayerwerk(DE)**

(72) Erfinder: **Zecher, Wilfried, Dr.**
**Treptowerstrasse 6**
**W-5090 Leverkusen 1(DE)**
Erfinder: **Reinking, Klaus, Dr.**
**Robert-Stolz-Strasse 16b**
**W-5632 Wermelskirchen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 173 212 B1

## Beschreibung

Die Erfindung betrifft die Herstellung von Abmischungen aus aliphatisch-aromatischen Polyamidimiden und Polyamiden. Es ist bekannt, daß aliphatisch-aromatische Polyamidimide aus der Umsetzung von Polyisocyanaten mit cyclischen Polycarbonsäureanhydriden und Lactamen (DE-AS 1 770 202) oder Polyamiden (DE-AS 1 956 612) erhalten werden. Die Polymere zeichnen sich durch Eigenschaften wie hohe Erweichungstemperaturen und gute Abriebfestigkeit aus und können z.B. als hochtemperaturbeständige Beschichtungen auf dem Elektroisolierlack-Sektor Verwendung finden.

Es wurde nun gefunden, daß Abmischungen, die aus 10-99,8 Gew.-%, vorzugsweise 99,8-92 und 80-20 Gew.-%, aliphatisch-aromatischer Polyamidimide, die bei der Kondensation von organischen Polyisocyanten wie aliphatischen, aliphatisch-aromatischen und aromatischen Diisocyanaten mit cyclischen Polycarbonsäureanhydriden und Lactamen oder Polyamiden bei Temperaturen von 0-400 °C und gegebenenfalls in einem Lösungsmittel erhalten werden, und 0,2-90 Gew.-%, vorzugsweise 0,2-8 und 20-80 Gew.-% eines Polyamids bestehen, sich durch deutliche Vorteile gegenüber den reinen Komponenten auszeichnen.

Gegenstand der Erfindung ist daher ein Verfahren zur Herstellung einer thermoplastisch verarbeitbaren Mischung, dadurch gekennzeichnet, daß ein Kondensationsprodukt aus Polyisocyanaten, Polycarbonsäureanhydriden und Lactamen oder Polyamiden bei Temperaturen von 0 bis 400 °C, gegebenenfalls in einem Lösungsmittel, hergestellt wird und danach 0,2 bis 90 Gew.-% eines Polyamids mit 10 bis 99,8 Gew.-% des Kondensationsproduktes abgemischt werden.

Es wurde weiterhin gefunden, daß diese Polymere z.B. erhalten werden können, indem das Polyamidimid z.B. in einem phenolischen Lösungsmittel hergestellt, das Polyamid dann zugemischt und die Mischung anschließend in einem Eindampfextruder bei Temperaturen von 250-400 °C, gegebenenfalls unter Vakuum, aufkonzentriert und gegebenenfalls nachkondensiert wird.

So kann die hohe Viskosität der Schmelzen aromatisch-aliphatischer Polymaidimide schon durch Abmischen mit 0,2 bis 8 Gew.-% an Polyamiden ohne wesentliche Veränderungen der vorteilhaften Eigenschaften der Polyamidimide soweit gesenkt werden, daß die Herstellung auch komplizierter Formteile durch Spritzgießen möglich wird.

Andererseits ist es möglich, bestimmte, als Nachteile empfundene, Eigenschaften der Polyamide durch Abmischen mit 20-80 Gew.-% der aromatisch-aliphatischen Polyamidimide deutlich zu verbessern.

So gelingt es, die Wasseraufnahme der Polyamide an feuchter Luft, insbesondere im Tropenklima (40 °C; 92 % relative Feuchtigkeit) oder in Wasser dadurch zu verringern, daß man die Polyamide mit aromatisch-aliphatischen Polyamidimiden in den o.g. Konzentrationen mischt.

Die geringe mechanische Belastbarkeit der teilkristallinen Polyamide, z.B. Polyamid 6 und Polyamid 66, in der Wärme kann durch Abmischen mit aromatisch-aliphatischen Polyamidimiden in den o.g. Konzentrationen beträchtlich erhöht werden.

Als erfindungsgemäße Polyamide können Verbindungen eingesetzt werden, wie sie im Handel erhältlich oder nach bekannten Verfahren, z.B. Polymerisation oder Polykondensation, zugänglich sind, z.B. Polycapronamid (Nylon 6), Polyundecansäureamid, Polydodecansäureamid und Polyamide aus Dicarbonsäuren wie z.B. Adipinsäure, Sebacinsäure, Oxalsäure, Dibutylmalonsäure, Isophthalsäure und Terephthalsäure und Diaminen wie Ethylendiamin, Hexamethylendiamin, Nonamethylendiaminen wie 1,6-Diamino-2,2,4-trimethylhexan, Decamethylendiamin, 4,4'-Diamino-dicyclohexylamin und m- und p-Phenylendiamin, z.B. Polyhexamethylenadipamid (Nylon 66), Polyhexamethylenisophthalamid und Poly-2,2,4-trimethylhexamethylenterephthalamid. Besonders bevorzugt wird Polycapronamid (Nylon 6) eingesetzt.

Die Herstellung der erfindungsgemäß verwendbaren Polyamidimide durch Kondensation von Polyisocyanaten mit cyclischen Polycarbonsäureanhydriden und Lactamen oder Polyamiden wird beispielsweise in DE-AS 1 770 202 und 1 956 512 beschrieben.

Für die Herstellung erfindungsgemäß verwendbarer Polyamidimide können vorzugsweise Polyisocyanate eingesetzt werden, wie sie beispielsweise in der DE-OS 1 770 202 beschrieben sind.

Besonders bevorzugt werden phosgenierte Kondensate aus Anilin und Formaldehyd mit Polyphenylenmethylen-strukturen, technische Gemische aus Toluylendiisocyanaten, m-Phenylen-diisocyanat und symmetrische Verbindungen wie 4,4'-Diisocyanate-diphenylmethan, 4,4'-Diisocyanatodiphenylether, Naphtylen-(1,5)-diisocyanat, p-Phenylendiisocyanat, 4,4'-Diisocyanato-diphenyl-dimethylmethan, analoge hydro-aromatische Diisocyanate wie 4,4'-Diisocyanato-dicyclohexylmethansowie aliphatische Diisocyanate mit 2-12 C-atomen wie Hexamethylendiisocyanat und isomere Trimethylhexamethylendiisocyanate und von Isophoron abgeleitete Diisocyanate und deren Gemische.

Anstelle der Isocyanate können auch Verbindungen eingesetzt werden, die unter den Reaktionsbedingungen als Isocyanate reagieren, vorzugsweise die Additionsverbindungen von Alkoholen, Phenolen und Lactamen, z.B. von Phenol, technischen Kresolgemischen und Caprolactam oder von Gemischen aus den

den Isocyanaten entsprechenden Aminen und aliphatischen und aromatischen Kohlensäureestern, z.B. Kohlensäurediethylester, Kohlensäurediphenylester und Ethylencarbonat, die auch bereits partiell miteinander umgesetzt sein können, oder auch Polycarbodiimide und Isocyanato-isocyanurate aus den beschriebenen Polyisocyanaten.

Zur Regulierung des Molekulargewichts können auch monofunktionelle Isocyanate wie z.B. Phenylisocyanat, Tolylisocyanat, Cyclohexylisocyanat, Stearylisocyanat, $\omega,\omega,\omega$-Trifluorethylisocyanat und 3,5-Trifluormethyl-phenylisocyanat oder die entsprechenden Amine eingesetzt werden.

Zur Herstellung der erfindungsgemäß verwendbaren Polyamidimiden können cyclische polycarbonsäureanhydride verwendet werden, wie sie in DE-OS 170 202 und DE-OS 2 542 706 beschrieben werden, vorzugsweise Polycarbonsäureanhydride der Formel (I)

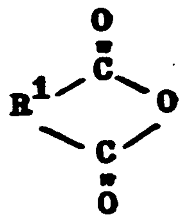

(I),

in welcher

$R^1$ einen gegebenenfalls substituierten aliphatischen $C_2$-$C_{20}$-Rest, cycloaliphatischen $C_5$-$C_{10}$-Rest, einen aliphatisch-aromatischen Rest mit 1 bis 10 C-Atomen im aliphatischen Teil und 6 bis 10 C-Atomen im aromatischen Teil oder einen aromatischen Rest mit 6 bis 10 C-Atomen bedeutet, der neben der cyclischen Anhydridgruppe mindestens noch eine weitere cyclische Anhydridgruppe oder eine Carboxylgruppe trägt,

bedeutet.

Als Beispiele seien Butantetracarbonsäuredianhydrid, Cyclopentantetracarbonsäuredianhydrid, Pyromellitsäuredianhydrid, Benzophenontetracarbonsäuredianhydrid und besonders bevorzugt Trimellitsäureanhydrid aufgeführt.

Anstelle der Carbonsäureanhydride können auch Derivate wie die Alkylester oder Phenylester oder die Polycarbonsäuren selbst eingesetzt werden, die im Verlauf der Reaktion in die Säureanhydride übergehen.

Zur Regulierung des Molekulargewichts werden unter den Reaktionsbedingungen monofunktionell reagierende Carbonsäuren wie z.B. Phthalsäure oder deren Anhydrid, Benzoesäure oder Palmitinsäure eingesetzt, die weiterhin mit Alkyl oder Halogen wie Fluor oder Chlor substituiert sein können.

Zur Herstellung der erfindungsgemäß verwendbaren Polyamidimide werden Lactame, beispielsweise solche der Formel (II)

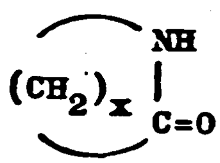

(II),

in welcher

x eine ganze Zahl von 2 bis 20 bedeutet,

eingesetzt.

Vorzugsweise wird Caprolactam eingesetzt.

Anstelle oder in Kombination mit den Lactamen können Polyamide eingesetzt werden, wie sie in DAS 1 956 512 beschrieben werden, z.B. Polycapronamid (Nylon 6), Polydodecansäureamid und Polyamide aus Dicarbonsäuren wie z.B. Adipinsäure, Sebacinsäure, Oxalsäure, Dibutylmalonsäure, Isophthalsäure und Terephthalsäure und Diaminen wie Ethylendiamin, Hexamethylendiamin, Decamethylendiaminen und m- und p-Phenylendiamin. Bevorzugt verwendet werden Polycapronamid (Nylon 6) oder Polyhexamethylenadipamid (Nylon 66).

Die Herstellung der erfindungsgemäß verwendbaren Polyamidimide kann in Lösungsmitteln erfolgen, wie dies in DE-AS 1 770 202 beschrieben wird. Bevorzugt werden als Lösungsmittel Phenole wie Phenol

und technische Gemische aus o-, m- und p-Kresolen, weiterhin Lactame wie Caprolactam oder N-Methylcaprolactam, Butyrolacton und Tetramethylensulfon verwendet.

Zur Herstellung der erfindungsgemäß verwendbaren Polyamidimide werden die Reaktionskomponenten mit oder ohne Lösungsmittel einige Minuten bis zu mehreren Stunden bei Temperaturen von 0 - 400 °C gehalten. Der Verlauf der Reaktion läßt sich beispielsweise über die Gasentwicklung, den Anstieg der Viskosität und die IR-Spektren verfolgen.

Als besonders geeignet haben sich erfindungsgemäße Polyamidimide mit einer relativen Viskosität, gemessen an einer 1 %igen Lösung in Kresol bei 25 °C, von 1,5 bis 3,0, vorzugsweise von 1,7 bis 2,6 mPas erwiesen.

Es ist zuweilen vorteilhaft, die Herstellungsreaktion in mehreren Stufen durchzuführen oder die einzelnen Komponenten in unterschiedlicher Reihenfolge oder bei verschiedenen Temperaturen zuzugeben. So kann das Polymere in einem phenolischen Lösungsmittel hergestellt, dann aus der Lösung mit einem Nichtlöser wie z.B. Methanol gefällt und eventuell noch auf einem Extruder nachkondensiert werden.

Eine bevorzugte Ausführungsform besteht darin, das Polymere in einem Lösungsmittel herzustellen, gegebenenfalls bereits im Kessel zu einer noch fließfähigen Lösung oder einem Schmelzharz aufzukonzentrieren und den restlichen Konzentrationsvorgang, gegebenenfalls unter Nachkondensation, in einem Eindampfextruder, gegebenenfalls unter Vakuum, bei Temperaturen von 240 - 400 °C, vorzugsweise von 280 - 340 °C, auszuführen.

Im allgemeinen werden pro Val Isocyanat ein Val Carbonsäure oder cyclisches Carbonsäureanhydrid und pro Val Carbonsäureanhydrid 0,5 - 2 Val Lactam oder Amid zur Umsetzung gebracht, doch sind auch weitgehende Abweichungen von diesen Mengenverhältnissen möglich.

Eine weitere mögliche Ausführungsform besteht darin, überschüssiges Isocyanat mit Di- oder Tricarbonsäuren, z.B. Adipinsäure, Terephthalsäure, Isophthalsäure oder Trimesinsäure und überschüssige Carbonsäure mit polyfunktionellen Alkoholen, wie z.B. Ethylenglykol, Neopentylglykol, Hexandiol, Trimethylolpropan, Trishydroxyethylisocyanurat, Trishydroxyethylurazol und Polyestern mit endständigen Hydroxygruppen zur Reaktion zu bringen.

Die Herstellung der Polymeren kann durch Katalysatoren beeinflußt werden, z.B. durch Amine wie Triethylamin, 1,4-Diazobicyclo-(2,2,2)-octan, N-Ethylmorpholin, N-Methylimidazol und 2-Methylimidazol, durch anorganische und organische Metallverbindungen, insbesondere Verbindungen des Eisens, Bleis, Zinks, Zinns, Kupfers, Kobalts und Titans wie Eisen (III)-chlorid, Kobaltacetat, Bleioxid, Bleiacetat, Zinnoctoat, Dibutylzinn-dilaurat, Kupferacetylacetonat, Titantetrabutylat, Alkali-phenolate und Natriumcyanid und durch Phosphorverbindungen wie Trialkylphosphin und Methylphospholinoxid.

Die Herstellung der Legierungen kann z.B. erfolgen, indem die festen beschriebenen Polyamidimide und die Polyamide in fester Form in einen Extruder eingebracht und dann in der Schmelze durchmischt oder indem die Lösungen der Komponenten durchmischt und dann in einem Extruder eingedampft oder mit einem geeigneten Fällungsmittel, z.B. Methanol, gefällt werden. Eine bevorzugte Ausführungsform besteht darin, das Polyamid in die bei der Herstellung des Amidimids anfallende Lösung oder Schmelze einzumischen und die Abmischung dann, gegebenenfalls unter Nachkondensation, in einem Eindampfextruder bei Temperaturen von 240-400 °C, vorzugsweise von 280-340 °C, gegebenenfalls unter Vakuum, einzudampfen.

Die Abmischungen können z.B. als Thermoplaste verwendet werden und zeichnen sich durch besondere Zugfestigkeit, E-Moduli und Wärmeformbeständigkeit aus. Ihre Eigenschaften können für die verschiedenen Anwendungsgebiete durch Anderung der Mengenverhältnisse, des Kondensationsgrades und durch Zumischung von nieder- und hochmolekularen Komponenten wie Füllstoffen, Pigmenten, Alterungsschutzmittel, Gleitmitteln, Weichmachern und weiteren Polymeren variiert werden.

## Beispiele

### Beispiel 1

In die Lösung von 791 g Caprolactam in 2630 g einer Mischung aus gleichen Teilen Phenol und einem Gemisch technischer Kresole werden bei 120 °C 1557 g 4,4'-Diisocyanatodiphenylmethan, 16,7 g Phenylisocyanat, 121,8 g eines Gemisches aus 80 % 2,4- und 20 % 2,6-Toluylendiisocyanat und 1344 g Trimellitsäureanhydrid nach Maßgabe der exothermen Reaktion eingetragen. Dann wird 2 Std. bei 170, 2 Std. bei 190 und 4 Std. bei 200 °C gerührt. Die Kondensation erfolgt under Abspaltung von Kohlendioxid. Dann werden unter leichtem Vakuum 1560 g des Lösungsmittels abdestilliert und den Rückstand noch 2 Std. bei 215 °C gehalten. Anschließend werden 129 g Polyamid-6 (Durethan BK 31® der Bayer AG) eingetragen und in der Schmelze verrührt. Man erhält das Polyamidimid/Polyamid beim Erkalten als sprödes braunes Harz, das mit einer Schlagmühle zerkleinert wird. Der Festgehalt beträgt ca. 76 Gew.-%,

die Viskosität $\eta_D^{25}$ einer 15 %igen Lösung in Kresol 710 mPas.

Das so hergestellte Harz wird in einem Zweiwellen-Eindampfextruder vom Typ ZSK 32 bei einer maximalen Manteltemperatur von 330 °C und einem Druck von 30 mbar aufkonzentriert. Man erhält ein transparentes elastisches Harz, das durch Spritzguß verarbeitbar ist. Die relative Viskosität $\eta$, gemessen bei 25 °C an einer 1 %-igen Lösung in Kresol, beträgt 2,12.

Beispiel 2

Die Herstellung des Imid-Harzes erfolgt entsprechend Beispiel 1. Als Polyamid werden 193 g Hexamethylenadipamid (Nylon 66) zugemischt. Man erhält die Abmischung als sprödes Harz mit einem Festgehalt von ca. 76 Gew.-% und einer Viskosität, gemessen an einer 15 %igen Lösung in Kresol, von $\eta^{25}$ = 730 mPas.

Eine Probe des Harzes wird im Stickstoffstrom zuerst bei 250 und dann bei 300 °C eingedampft. Man erhält ein schmelzbares und elastisches braunes Harz mit der relativen Viskosität $\eta^{25}$ = 1,98, gemessen an einer 1 %igen Lösung in Kresol.

Beispiel 3

In 200 g Phenol/Kresol (1:1) werden 33,9 g Polycapronamid (Nylon 6) gelöst. Dann werden bei 120 °C 100 g 4,4'-Disiocyanatodiphenylmethan, 17,4 g 2,4-Toluylendiisocyanat und 96 g Trimellitsäureanhydrid eingetragen. Das Reaktionsgemisch wird 2 Std. bei 170 °C, 4 Std. bei 190 °C und 6 Std. bei 205 °C gerührt. Anschließend werden 130 g des Lösungsmittelgemisches abdestilliert, der Rückstand noch 4 Std. bei 215 °C gehalten und dann 6,1 g Polyhexamethylenadipamid (Nylon 66) eingerührt. Man erhält ein sprödes Harz mit einem Festgehalt von ca. 75 Gew.-%. Die Viskosität $\eta^{25}$ einer 15 %igen Lösung in Kresol beträgt 830 mPas.

Eine Probe der so hergestellten Abmischung wird im Stickstoffstrom zuerst bei 250 °C und dann bei 300 °C eingedampft.

Man erhält ein elastisches gelbbraunes Harz mit der relativen Viskosität $\eta^{25}$ = 1,94.

Beispiel 4

In eine Lösung von 113 g Caprolactam in 380 g Kresol/Phenol (1:1) werden bei 120-130 °C 17,4 g eines technischen Gemisches aus 80 % 2,4- und 20 % 2,6-Toluylendiisocyanat, 225 g 4,4'-Diisocyanatodiphenylenmethan und 192 g Trimellitsäureanhydrid eingetragen. Dann wird nach Maßgabe der Gasentwicklung auf 190 °C aufgeheizt und 2 Std. bei 190 °C und 4 Std. bei 205 °C gerührt. Anschließend werden 220 g des Lösungsmittelgemisches unter leichtem Vakuum abdestilliert, der Rückstand 2 Std. auf 215 °C erhitzt und 13,8 g Polyhexamethylenisophthalamid eingerührt. Man erhält die Amidimid-Abmischung beim Erkalten als sprödes Harz mit einem Festgehalt von ca. 75 Gew.-%. Die Viskosität einer 15 %igen Lösung in Kresol beträgt $\eta^{25}$ = 1020 mPas.

Eine Probe der so hergestellten Abmischung wird im Stickstoffstrom bei 250 und 300 °C zu einem klaren elastischen Harz eingedampft. Die relative Viskosität beträgt $\eta^{25}$ = 2,03.

Beispiel 5

Die Herstellung des Imid-Harzes erfolgt entsprechend Beispiel 4. Als Polyamid-Komponente werden in die Schmelze 4,6 g Polyhexamethylenadipamid (Nylon 66) bis zur Lösung eingerührt. Dann wird mit 1480 g Kresol auf einen Festgehalt von ca. 20 Gew.-% verdünnt. Aus dieser Lösung wird durch Einrühren in Methanol ein gelbes Pulver gefällt, das getrocknet und bei 300 °C unter Stickstoff zu einem gelbbraunen elastischen Harz zusammengeschmolzen wird. Die relative Viskosität beträgt $\eta^{25}$ = 1,74, gemessen an einer 1 %igen Lösung in Kresol.

Beispiel 6

In einem Doppelwellenextruder (Werner & Pfleiderer ZSK 32), dessen Zylinder und Düse auf 270 °C erhitzt sind, werden bei einer Schneckendrehzahl von 100 U/min getrennt 40 Gew.-Teile Polyamidimid, das nach Beispiel 1 hergestellt wurde, und 60 Gew.-Teile Polyamid 6 (Durethan B 40F) eindosiert. Die in Extruder homogenisierte Schmelze wird als Rundstrang ausgestoßen, der nach dem Erkalten granuliert wird.

Formteile, die aus diesem Granulat bei 270 °C gespritzt werden, nehmen an normalfeuchter Luft 50 %

r.F.) bei 23°C lediglich 1,8 Gew.-% Wasser auf, wohingegen die aus reinem Polyamid 6 gespritzten Formteile 2,8 Gew.-% Wasser aufnehmen.

Beispiel 7

In einem Doppelwellenextruder (Werner & Pfleiderer ZSK 32), dessen Zylinder und Düse auf 280°C erhitzt sind, werden bei einer Schneckendrehzahl von 100 U/min getrennt 40 Gew.-Teile Polyamidimid, hergestellt entsprechend Beispiel 1, und 60 Gew.-Teile Polyamid 66 (Durethan A 30) eindosiert. Die im Extruder homogenisierte Schmelze wird als Rundstrang ausgestoßen, der nach dem Erkalten granuliert wird.

An Prüfkörpern, die aus diesem Granulat bei 280°C gespritzt worden waren, wurde eine heat deflection Temperatur (Temperatur, bei der ein Stab mit den Abmessungen 120 x 10 x 4 mm sich unter einer Biegelast von 1,8 kg um 6 mm durchgebogen hat) von 95° gemessen, wohingegen die heat deflection Temperatur von Durethan A 30 lediglich 70° beträgt.

## Patentansprüche

1. Verfahren zur Herstellung einer thermoplastisch verarbeitbaren Mischung, dadurch gekennzeichnet, daß ein Kondensationsprodukt aus Polyisocyanaten, Polycarbonsäureanhydriden und Lactamen oder Polyamiden bei Temperaturen von 0 bis 400 °C, gegebenenfalls in einem Lösungsmittel, hergestellt wird und danach 0,2 bis 90 Gew.-% eines Polyamids mit 10 bis 99,8 Gew.-% des Kondensationsproduktes abgemischt werden.

2. Verfahren nach Anspruch 1 , dadurch gekennzeichnet, daß 92 - 99,8 Gew.-% eines Kondensationsproduktes aus Polyisocyanaten, Polycarbonsäureanhydriden und Lactamen oder Polyamiden und 0,2 - 8 Gew. -% Polycapronamid oder Polyhexamethylenadipamid abgemischt werden.

3. Verfahren nach Anspruch 1, dadurch gekennzeichnet, daß ein Kondensationsprodukt aus Polyisocyanaten, Trimellitsäureanhydrid und Lactamen oder Polyamiden in einem Lösungsmittel hergestellt, mit Polycapronamid oder Polyhexamethylenadipamid versetzt und in einem Eindampfextruder bei Temperaturen von 250 - 400°C und gegebenenfalls unter Vakuum aufkonzentriert und gegebenenfalls nachkondensiert wird.

## Claims

1. A process for the production of a thermoplastically processible mixture, characterized in that a condensation product of polyisocyanates, polycarboxylic anhydrides and lactams or polyamides is prepared at temperatures of 0 to 400°C, optionally in a solvent, and 0.2 to 99.8% by weight of a polyamide are then mixed with 10 to 99.8 % by weight of the condensation product.

2. A process as claimed in claim 1, characterized in that 92 to 99.8 % by weight of a condensation product of polyisocyanates, polycarboxylic anhydrides and lactams or polyamides and 0.2 to 8% by weight polycaproic amide or polyhexamethylene adipic amide are mixed.

3. A process as claimed in claim 1, characterized in that a condensation product of polyisocyanates, trimellitic anhydride and lactams or polyamides is prepared in a solvent, polycaproic amide or polyhexamethylene adipic amide is added and the mixture is concentrated, optionally *in vacuo*, in an evaporation extruder at 250 to 400°C and is optionally post-condensed.

## Revendications

1. Procédé de production d'un mélange susceptible de mise en oeuvre thermoplastique, caractérisé en ce qu'on prépare un produit de condensation de polyisocyanates, d'anhydrides d'acides polycarboxyliques et de lactames ou de polyamides, à des températures de 0 à 400°C, éventuellement dans un solvant, puis on mélange 0,2 à 90 % en poids d'un polyamide avec 10 à 99,8 % en poids du produit de condensation.

2. Procédé suivant la revendication 1, caractérisé en ce qu'on mélange 92 à 99,8 % en poids d'un produit de condensation de polyisocyanates, d'anhydrides d'acides polycarboxyliques et de lactames ou de

polyamides et 0,2 à 8 % en poids de polycapronamide ou de polyhexaméthylène-adipamide.

**3.** Procédé suivant la revendication 1, caractérisé en ce qu'on prépare un produit de condensation de polyisocyanates, d'anhydride d'acide trimellitique et de lactames ou de polyamides dans un solvant, on additionne ce produit de polycapronamide ou de polyhexaméthylèneadipamide et on concentre le mélange dans une extrudeuse à évaporation à des températures de 250 à 400 °C et le cas échéant sous vide et on effectue éventuellement une post-condensation.